# EUROPÄISCHE PATENTSCHRIFT

(11) **EP 0 798 819 B1**
(45) Veröffentlichungstag und Bekanntmachung des Hinweises auf die Patenterteilung: **28.03.2001**
(21) Anmeldenummer: 97102046.6
(22) Anmeldetag: 10.02.1997
(51) Int. Cl.: H01R 25/14, H02G 5/06

(54) **Vorrichtung zur lösbaren Befestigung von einem oder mehreren Geräten an einem oder mehreren Orten und zu deren elektrischem Anschliessen**
Device for securing in a demountable manner one or more appliance in one or more places and for their electric connection
Dispositif pour la fixation détachable d'un ou de plusieurs appareils à un ou plusieurs endroits et pour leur connexion électrique

(30) Priorität: 29.03.1996 DE 19612575
(43) Veröffentlichungstag der Anmeldung: 01.10.1997
(73) Patentinhaber: ENDRESS + HAUSER GMBH + CO., D-79689 Maulburg (DE)
(72) Erfinder: Hintner, Gottfried, 79650 Schopfheim (DE); Grittke, Udo, 79541 Lörrach (DE)

(56) Entgegenhaltungen:
- EP-A- 0 159 078
- EP-A- 0 453 267
- WO-A-96/03788
- DE-A- 3 439 338
- DE-A- 3 933 703
- FR-A- 2 208 213

## Beschreibung

Die Erfindung betrifft eine Vorrichtung zur lösbaren Befestigung von einem oder mehreren Geräten an einem oder mehreren Orten und deren elektrischem Anschließen.

Bei in der Meß- und Regeltechnik üblichen Anwendungen, z.B. bei der Kontrolle, Steuerung oder Automatisierung komplexer Prozesse, sind üblicherweise mehrere Meßgeräte, z.B. Druck-, Temperatur-, Durchfluß- oder Füllstandsmeßgeräte, gleichzeitig im Einsatz. Ein Meßgerät besteht in der Regel aus einem Meßaufnehmer und einem entfernt davon angeordneten Auswerte- oder Schaltgerät. Die Geräte müssen einzeln angeschlossen werden, d.h. sie müssen mit Energie versorgt werden, und gegebenenfalls müssen Signalleitungen zu den Geräten hin und von den Geräten weg geführt werden.

In der DE-A 39 33 703 ist eine Vorrichtung zur lösbaren Befestigung von einem oder mehreren Geräten an einem oder mehreren Orten und deren elektrischem Anschließen an ein eine oder mehrere Adern aufweisendes Kabel mit mindestens einem, an einem der Orte montierten als Befestigungselement dienenden Schiene beschrieben,
- bei welcher Vorrichtung jedes Gerät eine Schnapphalterung aufweist, mittels der es auf das jeweilige Befestigungselement aufrastbar ist, und
- bei der das elektrische Anschließen des jeweiligen Geräts an die Adern des Kabels beim Aufrasten der jeweiligen Schnapphalterung erfolgt.

Als Befestigungselement ist eine Schiene, insb. eine Hutschiene vorgesehen. In der Schiene verlaufen in Längsrichtung starre, blanke Leitungen, die von einem Kunststoffprofil umschlossen sind. Das Kunststoffprofil weist in Abständen voneinander angeordnete Ausnehmungen auf, die jeweils über die Breite der Ausnehmungen die Leitungen freilegen. An den Geräten sind elektrische Kontaktglieder angeordnet, die beim Aufrasten der Geräte auf die Schiene den elektrischen Anschluß der Geräte an die Leitungen herstellen.

Ein Nachteil einer solchen Vorrichtung ist, daß die Geräte nur an durch die Ausnehmungen fest vorgegebenen Orten aufrastbar sind. Eine freie Wahl des Abstands zwischen zwei benachbarten Geräten, wie dies z.B. zur Belüftung oder Kühlung erforderlich sein kann, ist nicht möglich. Zusätzlich ist die Breite der einsetzbaren Geräte nicht beliebig, sondern durch die Abstände der Ausnehmungen vorgegeben.

Ein weiterer Nachteil besteht darin, daß die Leitungen dort, wo Steckplätze frei bleiben, nicht gegen Oxidation, Korrosion und Feuchtigkeit geschützt sind. Dies kann bei einer späteren Bestückung dieser Steckplätze zu Problemen bei der Kontaktierung führen.

Ein weiterer Nachteil besteht darin, daß es nicht vorgesehen ist, einzelne Geräte entfernt von der Schiene anzuordnen. Dies kann jedoch, z.B. bei beengten Raumverhältnissen am Einsatzort, erforderlich sein.

In der FR-A 2 208 213 ist eine Vorrichtung zur lösbaren Befestigung von Steckern und zu deren elektrischem Anschließen an ein eine oder mehrere Adern aufweisendes Kabel beschrieben. Der Stecker weist einen an einer Wand anschraubbaren Sockel und einen Deckel auf. Auf der wand-abgewandten Seite des Sockels weist dieser ein der Kabelform nachempfundenes Profil auf. In dem Deckel sind Durchdringungskontakte angeordnet, die beim Schließen desselben einen elektrischen Kontakt zu den Adern des Kabels herstellen.

Es ist eine Aufgabe der Erfindung, eine Vorrichtung zur lösbaren Befestigung von einem oder mehreren Geräten an einem oder mehreren Orten und deren elektrischem Anschließen an ein eine oder mehrere Adern aufweisendes Kabel mit mindestens einem, an einem der Orte montierten als Befestigungselement dienenden Schiene anzugeben, bei welcher Vorrichtung
- jedes Gerät eine Schnapphalterung aufweist, mittels der es auf das jeweilige Befestigungselement aufrastbar ist, und
- bei der das elektrische Anschließen des jeweiligen Geräts an die Adern des Kabels beim Aufrasten der jeweiligen Schnapphalterung erfolgt,
welche Vorrichtung ein hohes Maß an Flexibilität bzgl. der räumlichen Anordnung und der Breite der Geräte aufweist, die eine Verdrahtung der Geräte mit sehr geringem Aufwand ermöglicht und bei der die Adern des Kabels gegen Oxidation, Korrosion und Feuchtigkeit geschützt angeordnet sind.

Hierzu besteht die Erfindung in einer Vorrichtung zur lösbaren Befestigung von einem oder mehreren Geräten an einem oder mehreren Orten und zu deren elektrischem Anschließen an ein eine oder mehrere Adern aufweisendes Kabel mit mindestens einem, an einem der Orte montierten als Befestigungselement dienenden Schiene,
- bei welcher Vorrichtung
- jedes Gerät eine Schnapphalterung aufweist, mittels der es auf das jeweilige Befestigungselement aufrastbar ist und
- das elektrische Anschließen des jeweiligen Geräts an die Adern des Kabels beim Aufrasten der jeweiligen Schnapphalterung durch Durchdringungskontakte erfolgt, und
- auf der Schiene eine Kabelhalterung angeordnet ist,
   -- die ein der Kabelform nachgebildetes Profil aufweist, in das das Kabel eingelegt ist,
   -- die ebenfalls eine Schnapphalterung aufweist,
   -- die an jedem beliebigen Ort entlang der Schiene aufrastbar ist, und
   -- die ein Führungselement aufweist, das beim Aufrasten des Geräts in eine dazu formgleiche Ausnehmung des Geräts eingreift.

Gemäß einer Ausgestaltung der Erfindung sind die Durchdringungskontakte direkt am Gerät angeordnet.

Gemäß einer anderen Ausgestaltung
- ist ein Deckel für die Kabelhalterung vorgesehen,
   -- auf dessen Innenseite Durchdringungskontakte angeordnet sind,
      --- die beim Schließen des Deckels eine elektrische Verbindung zu den Adern des Kabels herstellen, und
   -- auf dessen Außenseite Steckkontakte angeordnet sind,
      --- die mit den Durchdringungskontakten elektrisch leitend verbunden sind.

Gemäß einer Weiterbildung ist ein Koppelbaustein vorgesehen, der einen, auf die Schiene aufschnappbaren Grundkörper aufweist.

Gemäß einer Ausgestaltung weist der Grundkörper einen ersten und einen zweiten Abschnitt auf, die jeweils ein der Kabelform nachgebildetes Profil aufweisen. Es ist ein Deckel vorgesehen, der die beiden Abschnitte überdeckt. Ein Ende des Kabels ist in das Profil des ersten Abschnitts und ein Ende einer weiteren Leitung in das Profil des zweiten Abschnitts eingelegbar. In dem Deckel sind Durchdringungskontakte in einem, bei geschlossenenem Deckel dem ersten Abschnitt gegenüber-liegenden, ersten Bereich und in einem, bei geschlossenenem Deckel dem zweiten Abschnitt gegenüberliegenden, zweiten Bereich angeordnet und zwischen den Durchdringungskontakten im ersten Bereich und den entsprechenden Durchdringungs-kontakten im zweiten Bereich besteht eine elektrische Verbindung.

Gemäß einer Weiterbildung des Koppelbausteins sind mindestens zwei Adern des Kabels Datenleitungen und in dem Koppelbaustein ist ein Widerstand angeordnet, über den zwei Datenleitungen miteinander verbunden sind.

Eine solche Vorrichtung ist besonders vielseitig einsetzbar, da einzelne Geräte oder Gerätegruppen räumlich beliebig zueinander positionierbar sind. Der Anschluß der Geräte an die Leitung erfolgt direkt beim Aufrasten der Geräte auf die vorgesehenen Befestigungselemente. Der Anschluß weiterer einzelner Geräte oder Gerätegruppen erfolgt über die Koppelbausteine. Es müssen lediglich die benötigten Leitungen in den Koppelbaustein eingelegt und der Deckel geschlossen werden.

Die Erfindung und weitere Vorteile werden nun anhand der Figuren der Zeichnung, in denen zwei Ausführungsbeispiele dargestellt sind, näher erläutert; gleiche Elemente sind in den Figuren mit denselben Bezugszeichen versehen.
- Fig. 1a: zeigt eine teilweise geschnittene Ansicht eines Ausführungsbeispiels einer Vorrichtung nach der ersten Lösungsvariante, bei der das Befestigungselement eine Hutschiene ist;
- Fig. 1b: zeigt eine Ansicht der Rückseite des Geräts in Fig. la dargestellten Geräts;
- Fig. 2a: zeigt eine Seitenansicht der in Fig. 1 dargestellte Kabelhalterung;
- Fig. 2b: zeigt eine Draufsicht auf die in Fig. 1 dargestellte Kabelhalterung;
- Fig. 3a: zeigt eine teilweise geschnittene Ansicht einer Vorrichtung nach der zweiten Lösungsvariante; und
- Fig. 3b: zeigt eine Draufsicht auf die in Fig. 4a dargestellte Vorrichtung;
- Fig. 4a: zeigt eine teilweise geschnittenen Seitenansicht eines Koppelbausteins; und
- Fig. 4b: zeigt eine Draufsicht auf den Koppelbaustein von Fig. 5a bei geöffnetem Deckel;

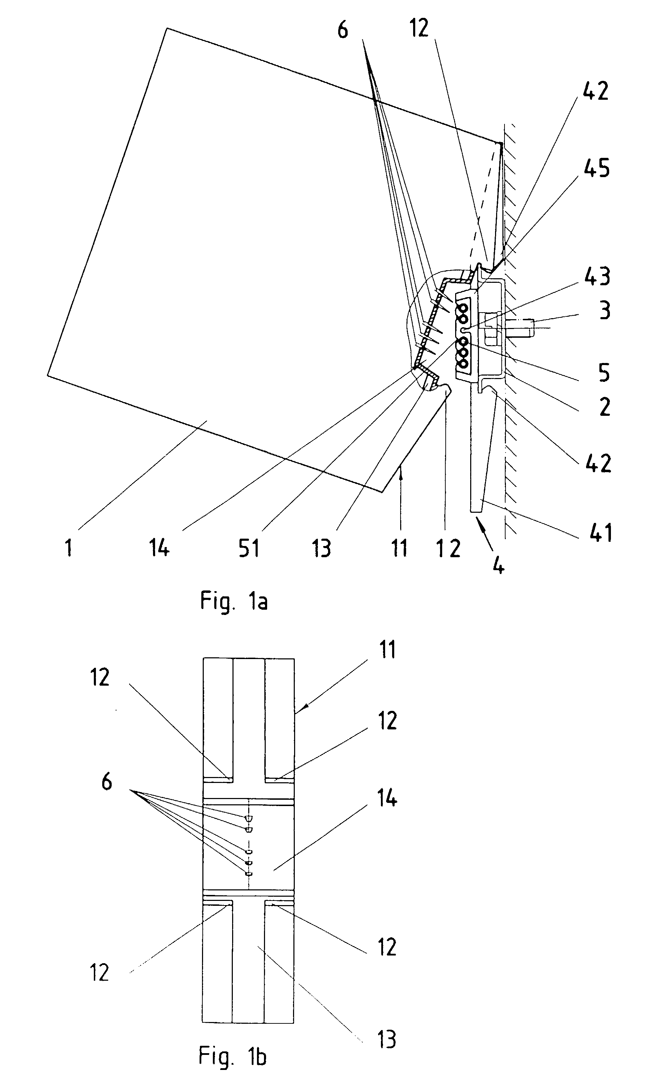

In Fig. 1a ist eine teilweise geschnittene Ansicht eines Ausführungsbeispiel einer Vorrichtung dargestellt, bei der ein Gerät 1, beispielsweise ein Auswerte- oder Schaltgerät eines Druck-, Temperatur-, Durchfluß- oder Füllstandsmeßgeräts, gleichzeitig an einem Ort mechanisch zu befestigen und elektrisch anzuschließen ist.

Es ist ein Befestigungselement, nämlich eine Hutschiene 2, dargestellt, die an einer in Fig. 1a schraffiert dargestellten Wand mittels Schrauben 3 befestigt ist. Auf der Hutschiene 2 ist eine Kabelhalterung 4 angeordnet.

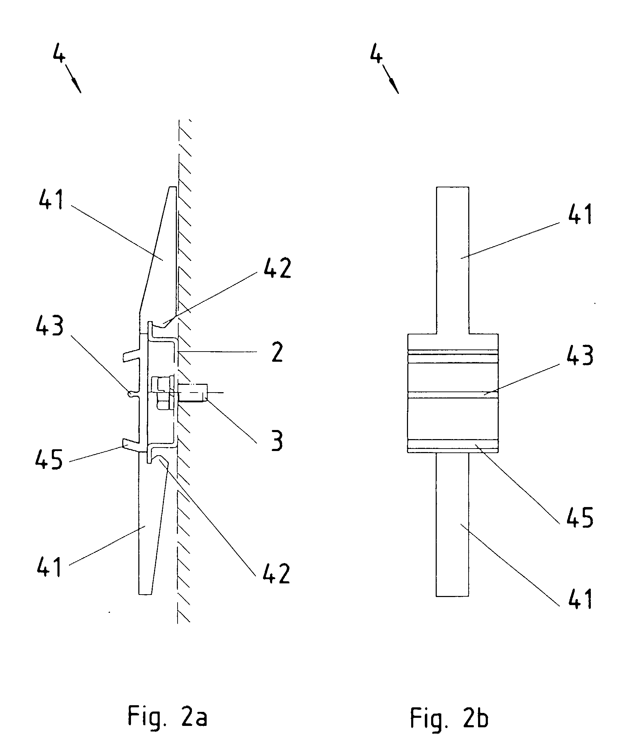

Fig. 2a zeigt eine Seitenansicht der Kabelhalterung 4 und Fig. 2b eine Draufsicht auf die Kabelhalterung 4. Sie besteht aus einer nahezu rechteckförmigen Basis 41 und weist auf deren wand-zugewandter Seite eine Schnapphalterung 42 auf, mit der sie auf der Hutschiene 2 aufgerastet ist. Die gesamte Länge der Basis 41 steht als Hebelarm beim Aufrasten zur Verfügung. Die Schnapphalterung 42 ermöglicht es, die Kabelhalterung 4 an jedem beliebigen Ort entlang der Hutschiene 2 zu befestigen.

Auf der wand-abgewandten Seite der Kabelhalterung 4 ist an die Basis 41 ein Profil 45 angeformt, das zur Aufnahme eines Kabels 5 dient. Wie aus der Draufsicht ersichtlich, ist das Profil 45 breiter als die Basis 41. Der Innenraum des Profils 45 ist der Form des Kabels 5 nachgebildet. Auf der wand-abgewandten Seite verjüngt sich der Querschnitt des Profils 45. Dadurch ist das Kabel 5, nachdem es in das Profil 45 eingepreßt worden ist, in seiner Lage fixiert. Zur zusätzlichen Fixierung ist in der Mitte des Profils 45 ein Steg 43 angeformt, der in eine rillenförmige Ausnehmung 51 des Kabels 5 eingreift.

Das Kabel 5 ist in dem hier dargestellten Ausführungsbeispiel ein fünfadriges Flachbandkabel. Ein solches Flachbandkabel bietet den Vorteil, daß es biegsam ist und ohne Spezialwerkzeuge auf eine beliebige Länge kürzbar ist.

Von den fünf Adern sind zwei durch die rillenförmige Ausnehmung 51 von den verbleibenden drei Adern räumlich abgetrennt. Dadurch ist die Orientierung des Kabels 5 im Profil 45 eindeutig festgelegt und eine diesbezügliche Fehlmontage ausgeschlossen.

Die Aufteilung der Adern ist vorzugsweise durch deren Verwendung gegeben. Z.B. können die beiden separat angeordneten Adern Signalleitungen und die drei verbleibenden Adern eine Erdung- und zwei Stromversorgungsleitungen sein.

Das Gerät 1 weist an dessen Rückseite 11 eine Schnapphalterung 12 auf, mittels der es auf die Hutschiene 2 aufrastbar ist; vgl. wieder die Fig. 1a und 1b. Die Breite der Rückseite 11 entspricht vorzugsweise der Breite des Profils 45. In der Mitte der Rückseite 11 verläuft in Längsrichtung eine Ausnehmung 13, deren Breite der Breite der Basis 41 der Kabelhalterung 4 entspricht. Die Basis 41 hat die Funktion eines Führungselements, das in die formgleiche Ausnehmung 13 des Geräts 1 bei dessen Aufrasten eingreift. Die Schnapphalterung 12 weist folglich zwei Teile auf, die durch die Ausnehmung 13 voneinander getrennt sind.

Quer zu der Ausnehmung 13 verläuft in der Mitte der Rückseite 11 eine weitere Ausnehmung 14, die im aufgerasteten Zustand das Profil 45 und das darin eingepreßte Kabel 5 umschließt.

In dieser Ausnehmung 14 sind Durchdringungskontakte 6 so angeordnet, daß sie beim Aufrasten des Geräts 1 die Isolation des Kabels 5 durchstechen und somit eine elektrische Verbindung zu den Adern des Kabels 5 herstellen. Die Isolation des Kabels 5 besteht vorzugsweise aus einem elastischen Kunststoff, z.B. aus Gummi, thermoplastischem Kautschuk oder Polyurethan. Solche Materialien sind begrenzt fließfähig, so daß die durch die Durchdringungskontakte 6 erzeugten Löcher in der Isolation nach Entfernung des Geräts sich von selbst wieder schließen. Die Adern sind folglich immer weitgehend gegen Oxidation, Korrosion und Feuchtigkeit geschützt.

Die dargestellte Vorrichtung ist jedoch nicht auf den Einsatz von Hutschienen begrenzt. Jede andere Schienenart, z.B. handelsübliche G-Schienen, die ein Aufrasten der Geräte erlaubt, ist gleichermaßen einsetzbar. Die Geometrie der Schnapphalterungen 12, 42 ist dann entsprechend anzupaßen.

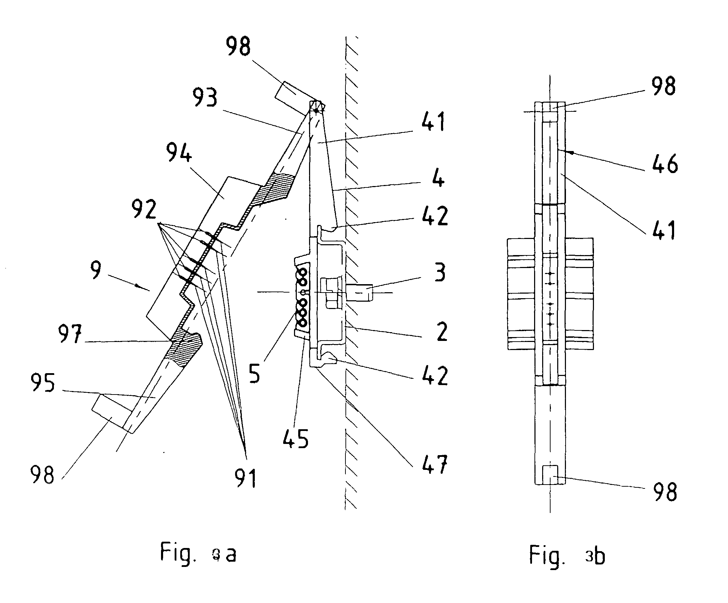

In Fig. 3a ist eine Seitenansicht und in Fig. 3b eine Draufsicht auf eine Vorrichtung gemäß einer zweiten Lösungsvariante dargestellt. Es sind hier lediglich die Unterschiede zu der in den Figuren 1a, 1b, 2a und 2b dargestellten ersten Lösungsvariante aufgeführt.

Ein wesentlicher Unterschied besteht darin, daß zwischen dem Gerät und der Kabelhalterung 4 ein Deckel 9 angeordnet ist. Dieser weist auf dessen Innenseite Durchdringungskontakte 91 auf, die beim Schließen des Deckels 9 eine elektrische Verbindung mit den Adern des Kabels 5 herstellen. Auf der Außenseite des Deckels 9 sind Steckkontakte 92 angeordnet, die dauernd mit den Durchdringungskontakten 91 elektrisch leitend verbunden sind und die elektrische Verbindung zu entsprechenden Steckverbindern des Geräts bei dessen Aufrasten herstellen.

Die Kabelhalterung 4 ist wie in Fig. 2a mit einer Schnapphalterung 42 versehen, mittels der sie auf der Hutschiene 2 aufgerastet ist. Im Gegensatz zu Fig. 2a erstreckt sich die Basis 41 jedoch nur auf einer Seite des Profils 45. Die Kabelhalterung 4 weist zu beiden Seiten des Profils 45 eine jeweils in deren Mitte angeordnete, sich in Längsrichtung der Kabelhalterung 4 erstreckende Ausnehmung 46 auf.

Der Deckel 9 hat drei Bereiche:
Einen ersten rechteckförmigen Bereich 93, der bei geschlossenem Deckel 9 in der formgleichen Ausnehmung 46 der Basis 41 der Kabelhalterung 4 angeordnet ist;
einen zweiten mittleren Bereich 94, in dem die Durchdringungskontakte 91 und auf dem die Steckkontakte 92 angeordnet sind und auf dessen wand-zugewandter achsenabgewandter Seite eine Schnapphalterung 97 angeformt ist;
und einen rechteckförmigen dritten Bereich 95, der die Breite der Basis 41 hat.

Der Deckel 9 ist über eine endseitig an der Basis 41 in der Ausnehmung 46 angeordnete, den ersten Bereich 93 durchdringende Achse 96 mit der Kabelhalterung 4 verbunden. Beim Schließen des Deckels 9 greift der erste Bereich 93 in die formgleiche Ausnehmung 46 der Basis 41 ein und die Durchdringungskontakte 91 schneiden in das Kabel 5 ein. Die Schnapphalterung 97 rastet auf einer Schulter 47, die auf der achsen-abgewandten Seite der der Kabelhalterung 4 angeordnet ist, auf.

An der Ausnehmung 14 der Geräte sind endseitig zu deren Befestigung auf der Hutschiene 2 z.B. zwei Schieberiegel angeordnet, die nach dem Aufstecken des jeweiligen Geräts auf der wand-zugewandten Seite hinter den äußeren Kanten der Hutschiene 2 seitlich von der Schnapphalterung 42 der Kabelhalterung geschlossen werden. In der Ausnehmung 14 sind weiterhin Steckverbinder angeordnet, die beim Aufrasten des Geräts eine elektrische Verbindung zu den Steckkontakten 92 herstellen.

Zur Führung des Geräts bei der Montage greifen die Basis 41 und der dritte Bereich des Deckels 9 in die formgleichen Ausnehmungen 13, 14 des Geräts ein. Zur zusätzlichen Stabilisierung des Geräts sind auf der wand-abgewandten Seite des Deckels 9 endseitig zwei Fixierelemente 98 angeformt, die ebenfalls in formgleiche nicht dargestellte Ausnehmungen des Geräts eingreifen.

Ein Vorteil einer solchen Vorrichtung ist, daß die Geräte gerade, d.h. ohne Drehung bzw. Kippung derselben, auf die Hutschiene 2 aufgesetzt werden können. Das Durchdringen der Isolation des Kabels 5, das z.B. bei Verwendung von festen Materialien als Isolationswerkstoff, einen gewissen Kraftaufwand erfordert, erfolgt durch das Schließen des Deckels 9. Dieser ist im Vergleich zu dem Gerät klein und die erforderliche Kraft kann durch den vorhandenen Hebelarm leicht ausgeübt werden. Bei großen und/oder schweren Geräten erleichtert dies die Handhabung erheblich.

Bei einer Vielzahl von Anwendungen ist es erforderlich, einzelne Geräte oder Gruppen von Geräten an voneinander entfernten Orten anzubringen und an eine gemeinsame Leitung anzuschließen. Hierfür ist ein in den Fig. 5a und 5b dargestellter Koppelbaustein 8 vorgesehen.

Der Koppelbaustein 8 ist sowohl als Endstück - in diesem Fall ist er neben einem einzelnen Gerät oder einer Gruppe von Geräten anzuordnen - als auch als Verbindungselement für die Verlängerung des Kabels 5 zwischen zwei entfernt voneinander angeordneten Gruppen von Geräten, zwei entfernt voneinander angeordneten einzelnen Geräten oder zwischen einer Gruppe von Geräten und einem entfernt von der Gruppe angeordneten einzelnen Gerät einsetzbar.

Der Koppelbaustein 8 weist einen rechteckförmigen Grundkörper 81 auf, an dessen einer Grundfläche eine Schnapphalterung 82 angeformt ist, mittels der dieser auf einer Hutschiene 2 aufrastbar ist. Genausogut kann ein solcher Grundkörper 8 auf einen anderen Schienentyp aufgerastet werden. Es ist dann lediglich die Schnapphalterung 81 entsprechend anders auszubilden.

Der Grundkörper 81 weist einen ersten und einen zweiten Abschnitt 84a, 84b auf. In beiden Abschnitten 84a, 84b ist jeweils ein der Form der Leitung 5 nachgebildetes Profil 85, 85' angeformt. Je nach Anwendung kann folglich in beide Abschnitte 84a, 84b ein Kabel 5, 5' eingelegt werden.

Es ist ein Deckel 86 vorgesehen, der in geschlossenem Zustand die beiden Abschnitte 84a, 84b überdeckt. Dieser ist mit dem Grundkörper 8 über ein Scharnier 83 verbunden.

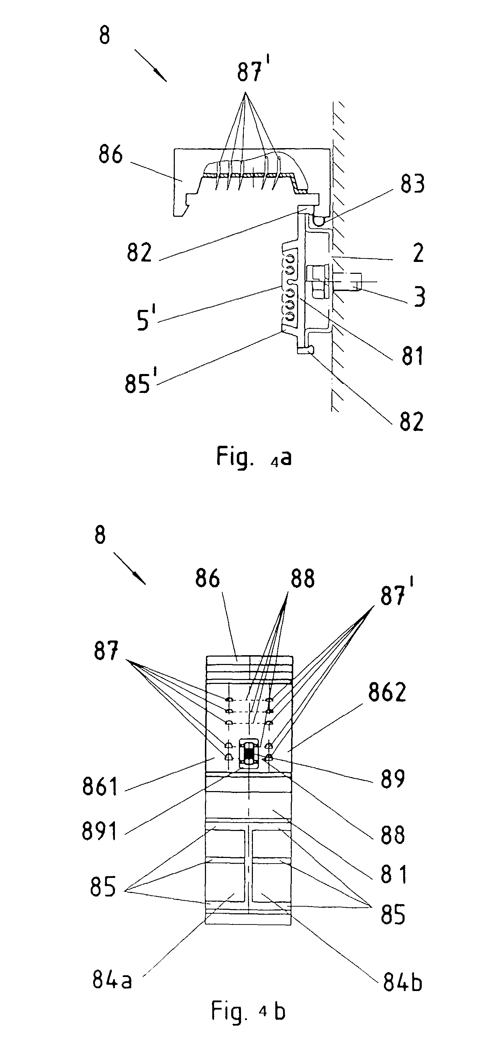

Fig. 4b zeigt eine Draufsicht auf den Koppelbaustein 8 bei geöffnetem Deckel 86. Der Deckel 86 weist zwei Bereiche 861, 862 auf. Diese sind so angeordnet, daß bei geschlossenenem Deckel 86 der Bereich 861 dem ersten Abschnitt 84a und der Bereich 862 dem zweiten Abschnitt 84b gegenüberliegt. In beiden Bereichen 861, 862 sind Durchdringungskontakte 87, 87' angeordnet, die, sofern in den entsprechenden Abschnitt ein Kabel 5 eingelegt ist, die Isolation dieses Kabels 5 durchstechen und eine elektrische Verbindung zu dessen Adern herstellen.

Zwischen jedem jeweiligen Durchdringungskontakt 87 im ersten Bereich 861 und dem auf gleicher Höhe im zweiten Bereich 862 angeordneten Durchdringungskontakt 87' besteht eine elektrische Verbindung. Hierzu sind in Fig. 5b gestrichelt dargestellte Verbindungskabel 88 innerhalb des Deckels 86 angeordnet.

Die beiden separat angeordneten Adern des Kabels 5 sind für den Fall, daß es sich dabei um Signalleitungen handelt, durch einen einsteckbaren Widerstand 89 miteinander verbindbar. Zur Aufnahme des Widerstands 89 ist im Deckel 86 eine Öffnung 891 angeordnet. Darin befinden sich zwei in Fig. 4b nicht dargestellte Federklemmen, in die der Widerstand 89 unter Bildung einer elektrischen Verbindung einsteckbar ist und die elektrisch leitend mit den beiden Durchdringungskontakten 87 verbunden sind, die die separat angeordneten beiden Adern des in den ersten Abschnitt 84a oder des in den zweiten Abschnitt 84b eingelegten Kabels 5 kontaktieren.

Sofern der Verwendungszweck dies erfodert, kann ein Koppelbaustein auch drei Bereiche aufweisen, in die jeweils ein Kabel einlegbar ist. Die drei Bereiche sind beispielsweise T-förmig angeordnet. Bei einer entsprechenden Verdrahtung im Deckel des Koppelbaustein ist somit die Bildung einer Verzweigung möglich.

## Patentansprüche

1. Vorrichtung geeignet zur lösbaren Befestigung von einem oder mehreren Geräten (1) an einem oder mehreren Orten und zu deren elektrischem Anschließen an ein eine oder mehrere Adern aufweisendes Kabel (5) mit mindestens einem, an einem der Orte montierten als Befestigungselement dienenden Schiene, bei welcher Vorrichtung
- jedes Gerät (1) eine Schnapphalterung (12) aufweist, mittels der es auf das jeweilige Befestigungselement auf rastbar ist und
- das elektrische Anschließen des jeweiligen Geräts (1) an die Adern des Kabels (5) beim Aufrasten der jeweiligen Schnapphalterung (12) durch Durchdringungskontakte (6, 91) erfolgt, und
- auf der Schiene eine Kabelhalterung (4) angeordnet ist,
-- die ein der Kabelform nachgebildetes Profil (45) aufweist, in das das Kabel (5) eingelegt ist,
-- die ebenfalls eine Schnapphalterung (42) aufweist,
-- die an jedem beliebigen Ort entlang der Schiene aufrastbar ist und
-- die ein Führungselement aufweist, das beim Aufrasten des Geräts (1) in eine dazu formgleiche Ausnehmung (13) des Geräts (1) eingreift.

2. Vorrichtung nach Anspruch 1, bei der die Durchdringungskontakte (6) direkt am Gerät (1) angeordnet sind.

3. Vorrichtung nach Anspruch 1, bei der
- ein Deckel (9) für die Kabelhalterung (4) vorgesehen ist,
-- auf dessen Innenseite Durchdringungskontakte (91) angeordnet sind,
--- die beim Schließen des Deckels (9) eine elektrische Verbindung zu den Adern des Kabels (5) herstellen, und
-- auf dessen Außenseite Steckkontakte (92) angeordnet sind,
--- die mit den Durchdringungskontakten (91) elektrisch leitend verbunden sind.

4. Vorrichtung nach Anspruch 1, bei der ein Koppelbaustein (8) vorgesehen ist,
-- der einen auf die Schiene (2) aufschnappbaren Grundkörper (81) aufweist.

5. Vorrichtung nach Anspruch 4, bei der
- der Grundkörper (81) einen ersten und einen zweiten Abschnitt (84a, 84b) aufweist, die jeweils ein der Kabelform nachgebildetes Profil (85, 85') aufweisen,
- ein die beiden Abschnitte (84a, 84b) überdeckender Deckel (86) vorgesehen ist,
- ein Ende des Kabels (5) in das Profil (85) des ersten Abschnitts (84a) einlegbar ist,
- ein Ende eines weiteren Kabels (5') in das Profil (85') des zweiten Abschnitts (84b) einlegbar ist,
- in dem Deckel (86) Durchdringungskontakte (87, 87') in einem, bei geschlossenenem Deckel (86) dem ersten Abschnitt (84a) gegenüberliegenden ersten Bereich (861) und in einem, bei geschlossenenem Deckel (86) dem zweiten Abschnitt (84b) gegenüberliegenden, zweiten Bereich (862) angeordnet sind und
- zwischen den Durchdringungskontakten (87) im ersten Bereich (861) und den entsprechenden Durchdringungskontakten (87') im zweiten Bereich (862) eine elektrische Verbindung besteht.

6. Vorrichtung nach Anspruch 5, bei der mindestens zwei Adern des Kabels (5) Datenleitungen sind und in dem Koppelbaustein (8) ein Widerstand (88) angeordnet ist, über den zwei der Datenleitungen miteinander verbunden sind.

## Claims

1. Device for the detachable fastening of one or more instruments (1) at one or more locations and for their electrical connection to a cable (5) having one or more wires, using at least one rail serving as a fastening element which is mounted at one of the locations, in which device
- each instrument (1) has a snap mounting (12) by means of which it can he locked onto the respective fastening element and
- the electrical connection of the respective instrument (1) to the wires of the cable (5) is carried out by penetration contacts (6, 91) while the respective snap mounting (12) is being locked on, and
- a cable mounting (4) is arranged on the rail,
-- which cable mounting has a profile (45) which reproduces the cable shape and into which the cable (5) is inserted,
-- which likewise has a snap mounting (42),
-- which can be locked on at any desired location along the rail and
-- which has a guide element which, while the instrument (1) is being locked on, engages in an identically-shaped recess (13) in the instrument (1).

2. Device according to Claim 1, in which the penetration contacts (6) are arranged directly on the instrument (1).

3. Device according to Claim 1, in which
- a cover (9) for the cable mounting (4) is provided,
-- on the inside of which penetration contacts (91) are arranged,
--- which, when the cover (9) is closed, produce an electrical contact to the wires of the cable (5), and
-- on the outer side of which plug contacts (92) are arranged,
--- which are electrically conductively connected to the penetration contacts (91).

4. Device according to Claim 1, in which a coupling module (8) is provided,
-- which has a basic element (81) which can be snapped onto the rail (2).

5. Device according to Claim 4, in which the basic element (81) has a first and a second section (84a, 84b), each of which has a profile (85, 85') that reproduces the cable shape,
- a cover (86) which covers the two sections (84a, 84b) is provided,
- one end of the cable (5) can be inserted into the profile (85) of the first section (84a),
- one end of a further cable (5') can be inserted into the profile (85') of the second section (84b),
- penetration contacts (87, 87') are arranged in the cover (86), in a first region (861) which is opposite the first section (84a) when the cover (86) is closed, and in a second region (862) which is opposite the second section (84b) when the cover (86) is closed, and
- there is an electrical connection between the penetration contacts (87) in the first region (861) and the corresponding penetration contacts (87') in the second region (862).

6. Device according to Claim 5, in which at least two wires of the cable (5) are data lines and there is arranged in the coupling module (8) a resistor (88) via which two of the data lines are interconnected.

## Revendications

1. Dispositif approprié à la fixation amovible d'un ou plusieurs modules (1) en un ou plusieurs emplacements et destiné au raccordement électrique de ceux-ci sur un câble (5) à un ou plusieurs conducteurs, comprenant au moins un rail monté à l'un des emplacements et utilisé comme élément de fixation, dans lequel dispositif
- chaque module (1) comporte un support à cliquet (12) au moyen duquel ledit module peut être bloqué sur chaque élément de fixation et
- le raccordement électrique de chaque module (1) avec les conducteurs du câble (5) est assuré par des contacts de pénétration (6, 91) lors du blocage de chaque support à cliquet (12), et
- une attache pour câble (4) est montée sur le rail
-- laquelle comporte un profilé (45) analogue à la forme du câble, dans lequel est posé le câble (5),
-- laquelle comporte également un support à cliquet (42),
-- laquelle peut être montée à n'importe quel emplacement le long du rail, et
-- laquelle comporte un élément de guidage, qui lors du montage du module (1) s'engage dans une cavité (13) de forme analogue, réalisée dans le module (1).

2. Dispositif selon la revendication 1, dans lequel les contacts de pénétration (6) sont disposés directement sur le module (1).

3. Dispositif selon la revendication 1, dans lequel
- un couvercle (9) est prévu pour l'attache pour câble (4),
-- sur la face intérieure duquel sont disposés les contacts de pénétration (91), qui au moment de la fermeture du couvercle (9) établissent une liaison électrique avec les conducteurs du câble (5), et
-- sur la face extérieure duquel sont disposés des contacts à fiches (92), qui forment une liaison électro-conductrice avec les contacts de pénétration (91).

4. Dispositif selon la revendication 1, dans lequel est prévu un module de couplage (8) qui est formé par un corps de base (81) à encliqueter sur le rail (2).

5. Dispositif selon la revendication 4, dans lequel
- le corps de base (81) comporte une première et une deuxième partie (84a, 84b), qui sont munies chacune d'un profilé (85, 85') analogue à la forme du câble,
- il est prévu un couvercle (86) recouvrant les deux parties (84a, 84b).
- une extrémité du câble (5) peut être insérée dans le profilé (85) de la première partie (84a),
- une extrémité d'un autre câble (5') peut être insérée dans le profilé (85') de la deuxième partie (84b),
- des contacts de pénétration (87, 87') sont disposés dans le couvercle (86) dans une première zone (861) en regard de la première partie (84a) lorsque le couvercle (86) est fermé et dans une deuxième zone (862) en regard de la deuxième partie (84b) lorsque le couvercle (86) est fermé et
- une liaison électrique est établie entre les contacts de pénétration (87) dans la première zone (861) et les contacts de pénétration (87') correspondants dans la deuxième zone (862).

6. Dispositif selon la revendication 5, dans lequel au moins deux conducteurs du câble (5) sont des lignes de transmission de données et deux des lignes de transmission de données sont reliées entre elles par l'intermédiaire d'une résistance (88) montée dans le module de couplage (8).
